# EUROPEAN PATENT SPECIFICATION

(11) **EP 1 991 447 B1**
(45) Date of publication and mention of the grant of the patent: **19.06.2013**
(21) Application number: 07715960.6
(22) Date of filing: 27.02.2007
(51) Int. Cl.: B60R 21/13, B60R 19/40

(54) **CRASH PROTECTION SYSTEM FOR A VEHICLE AND A METHOD FOR RELEASE AND EXTENSION OF A CRASH PROTECTION SYSTEM FOR A VEHICLE**
UNFALLSCHUTZSYSTEM FÜR EIN FAHRZEUG UND VERFAHREN ZUR FREIGABE UND ERWEITERUNG EINES UNFALLSCHUTZSYSTEMS FÜR EIN FAHRZEUG
SYSTEME DE PROTECTION CONTRE LES CHOCS POUR UN VEHICULE ET PROCEDE POUR LA LIBERATION ET L'EXTENSION D'UN SYSTEME DE PROTECTION CONTRE LES CHOCS POUR UN VEHICULE

(30) Priority: 27.02.2006 NO 20060944
(43) Date of publication of application: 19.11.2008
(73) Proprietor: Benteler Automobiltechnik GmbH, 33102 Paderborn (DE)
(72) Inventor: BERGER, Karl, Kristian, N-2816 Gjovik (NO); PEDERSEN, Roald, Helland, N-2818 Gjøvik (NO)
(74) Representative: Ksoll, Peter
(86) International application number: PCT/NO2007/000079
(87) International publication number: WO 2007/097641

(56) References cited:
- WO-A1-91/02669
- WO-A1-2004/094197
- WO-A1-2006/137745
- DE-A1- 10 100 875
- DE-A1- 19 540 819
- DE-A1- 19 712 955
- DE-B3- 10 300 790
- US-A1- 2006 001 248

## Description

Crash protection system for a vehicle and a method for release and extension of a crash protection system for a vehicle.

The present invention relates to active crash protection systems, particularly for vehicles such as passenger cars, and the way these systems are activated. The term "active" here refers to the protection systems being extended towards the impact, shortly before the impact takes place, following that the danger of impact has been detected and decided by an automatic sensing and governing system. In particular, the present invention relates to an improved system having a movable bar or beam, and a method for release and extension of the said bar or beam.

Systems with a movable roll over bar is known to be very useful for protecting the occupants in cars without protective roofs, in the case of having a roll over accident. DE 19781833 T1 discloses a common way of solving this.

A great number of crashes involve the front or rear structure of a car. Publication WO 97/47496 shows how a bumper system (beam) advantageously can be expanded in the direction of the crash shortly before the crash takes place.

In both cases the very useful effect of expanding the crash protection structure towards the crash is to create a longer or a higher vehicle to take the crash in a much better manner.

This invention is about a new and beneficial way of activating and expanding such systems, compared to the solutions hereto known. However the scope of the invention is not limited to front-, rear- and roll over crash protection systems. The solution may be used on crash protection structures in all directions that the car may be crashed or hit in an impact. One such direction may be sideways to the car, in the so-called side crash direction.

The effect of making the car structure longer is not only beneficial to the occupants of the car. It is well known, that in the case of a pedestrian being hit by the front of a car, the severity of the impact to the pedestrian may be lessened by adapting the car front crash structure to the situation. It may here be particularly useful for limiting the severity of damage to the knee and leg of the pedestrian by extending a low transverse "pedestrian beam" forward to first hit the lower part of the pedestrians leg. This invention is very well suited for defining a reliable such lower beam in a cost effective manner.

There are a great number of roll over protections systems (ROPS) provided with an extendable or deployable movable roll over bar suggested in the prior art. A common feature is a guiding regime controlling the position and deployment movement of the roll over bar. One of the topics in prior art is the struggle to ensure a successful release and deployment of the roll over bar even if the release or deployment of the bar is asymmetric. Problems similar to what is observed when a drawer is pulled out or pushed in asymmetrically, can occur and the increased resistance from the guides may slow down or completely prohibit the deployment of the roll over bar. This problem is in the following referred to as the jamming-effect (Schubladeneffekt). Geometrical variations (tolerances) in the car body, the roll over protecting system itself or the assembly process can lead to the same type of problems. The problems related to jamming-effect are increasing with increasing dimension of the deployable roll over bar in a direction perpendicular to the deployment direction. Therefore, some prior art in this area is focused on finding solutions for wide systems like roll over protection systems with one single roll over bar spanning a large part of the car width.

Another common topic in prior art is the release of the deployable roll over bar. Typically, the roll over bar is loaded by one or more pre-tensioned springs, and the system consists of one or more releasable locking devices which holds the roll over bar in a retracted position during normal use of the car and releases the roll over bar after receiving an electrical signal when a dangerous situation in which the roll over protection is needed is sensed by the car. Both electromagnetic and pyrotechnical versions of such devices are known and all the known devices contribute significantly to the cost of a ROPS. Some of the goals for new inventions in the ROPS area is to save cost and complexity by using only one releasable locking device (actuator) for each car.

DE 100 44 930 C1 shows a ROPS with a single, wide roll over bar spanning a large part of the car width and where the bar has two mainly vertical legs with a guiding system and deployment springs. A single releasable locking device is located in the middle of the bar, between the two legs. With this solution, the initial release of the system is symmetric, but jamming-effect caused by asymmetric effects due to tolerances in build and components used, such as guides and springs, are here not dealt with.

WO2004094197 (Karmann) describes a ROPS with a single, wide roll over bar spanning a large part of the car width. An additional synchronisation mechanism is included to ensure an equal deployment of both sides. This solution will solve the jamming-problem, however with added complexity and cost.

DE 197 12 955 A1 describes a ROPS with a single, wide roll over bar spanning a large part of the car width. The roll over bar is divided in three parts, two vertical columns and a cross member, and the connections between the three have sufficient flexibility to avoid the "drawer-effect". This solution will also solve the jamming-problem but the extras joints in the roll over bar can be critical for the crash strength of the system and they causes additional cost and weight.

DE 195 40 819 A1 discloses a crash protection system according to the preamble of claim 1 having a roll bar. Said roll bar is connected to a pair of vertical extending side bars. To compensate production tolerances the bar is manufactured as a hinged beam, wherein the side bars are connected with the roll bar via pivots to develop linkages. Said linkages are made of an elastic damping material.

With the present invention there is provided a new solution, which deals with challenges as mentioned above in a robust and cost effective manner. In addition, the new solution is inherently robust with respect to tolerances of components and assembly processes. The new solution also offers good space utilisation, and an improved guiding system, avoiding the effects of jamming. With the proposed solution, the need for symmetry in the release and deployment of the roll over bar is removed. This give freedom in location of the releasable locking device and the deployment springs do not need to set up a symmetric force on the roll over bar. The roll over bar is manufactured as a single part without need for flexible joints which jeopardises the structural integrity in crash and increases manufacturing cost.

These and further advantages can be achieved in accordance with the present invention as defined in the accompanying claims.

In the following, the invention shall be further described by examples and figures where:
- Fig. 1: discloses schematically in a perspective view an extendable roll over bar, in its protective, deployed position,
- Fig. 2: discloses schematically in a rear view an extendable roll over bar, in its retracted position,
- Fig. 3: discloses the roll over bar in the same view as of Fig. 2, when one side the bar is released and has completed a part of its deployment movement, and where the other side of the bar is still restrained in its retracted position and the entire bar is rotating about the upper right guide,
- Fig. 4 Fig. 4: discloses the roll over bar in the same view as of Fig. 2 and 3 when the entire roll over bar has completed its deployment movement and is locked in its deployed, protective position,
- Fig.5: discloses schematically an extendable protective structure, which is not part of the claimed invention.

### Part list (for both embodiments)

- A: Roll over protection system A' Extendable protective structure
- 1: Roll over bar
- 1': Crash protective structure
- 2: Releasable locking device
- 3, 3': Restraining hook
- 4, 4': Deployment springs
- 5, 5': Spring guide
- 6, 6': Deployment limiter
- 7, 7': Spring limiter
- 8: Rotation point guide
- 9, 9': Lower side guide
- 10, 10': Upper side guide
- 11, 11': Main housing
- 12, 12': Lower housing
- 14, 14': Locking Pawl
- 15, 15': Bolt for Locking Pawl
- 16, 16': Spring for Locking Pawl
- 17, 17': Spring Fixation
- 18, 18': Locking Pawl Bracket
- 19, 19': Shock Absorber
- 20, 20': Fixation for spring guide
- 21, 21': Upper Front/Rear Guide
- 22, 22': Bracket for Seat Belt Guide
- 23: Releasable hook
- 24, 24': Arresting fingers
- 25, 25': First crash release springs

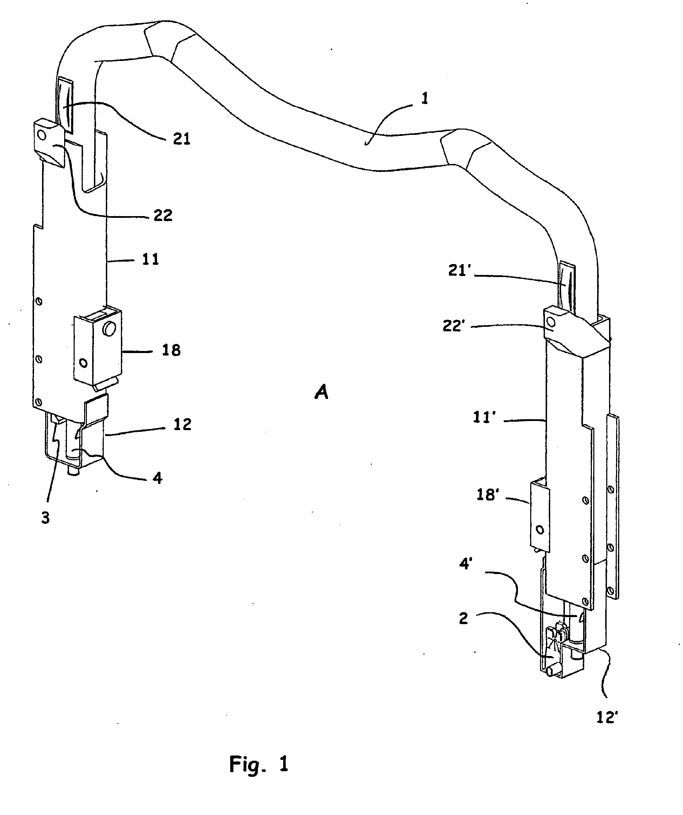

The following description relates to one possible realisation of the invention in accordance with the following claims. The description describes a roll over protection system as shown in Figures 1-4 with a single, wide roll over bar 1 and two housing assemblies 11 ,11', 12, 12' connecting the roll over bar 1 with the car body. The roll over bar 1 can be brought from a lower, mainly hidden, retracted position to an upper protective position by means of the forces from pre-tensioned deployment springs 4, 4'.

The positions of the roll over bar in retracted and extended condition and the movement of the roll over bar between the two positions are controlled by means of a set of centring- and guiding devices 9, 9', 10, 10', 21, 21' fixed to the housings. The roll over bar is restrained in its retracted position by a releasable locking device 2 fixed to the housings 11 ,12 on one side, and a restraining hook 3 fixed to the housings 11', 12' on the opposite side.

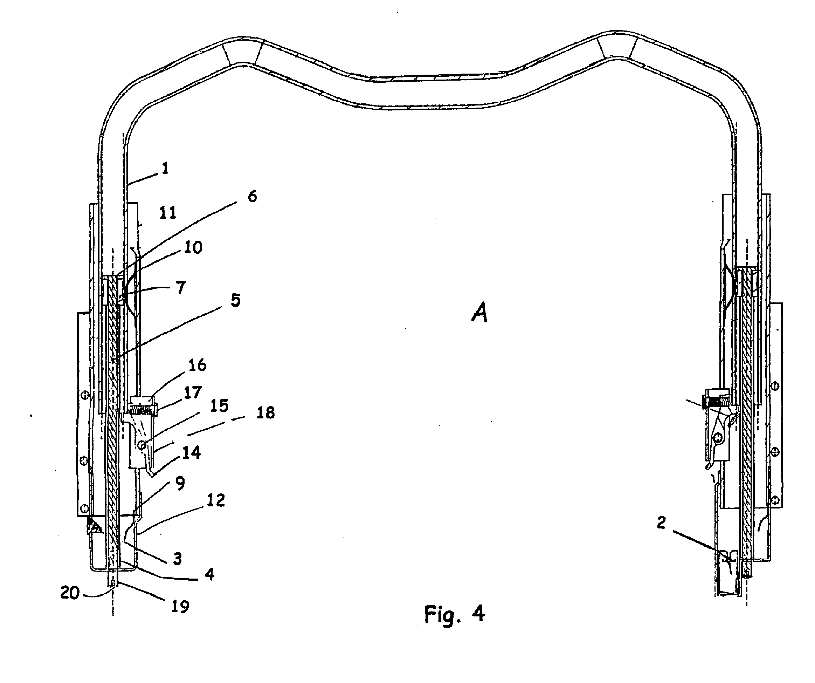

In the upper, protective position, as shown in Figure 4, the roll over bar is prevented from being pushed back into the housings by means of two spring-loaded, rotating locking pawls 14, 14' engaging the bottom of the two vertical legs of the roll over bar. When the roll over bar has to be brought back into its retracted position, for instance after a test-release, the locking pawls can be rotated away from its engagement with the roll over bar, and the roll over bar is again free to be moved down.

The complete system is typically mounted into the car behind the rear seats. An advantage with this variant is the possibility to combine it with collapsible seatbacks and hence get the possibility to increase the luggage compartment of the car. This possibility is very limited when two separate roll over bars for each side of the car is used.

The mainly U-shaped roll over bar 1 preferably consist of a reformed aluminium profile, and it can be formed in one plane only or it can have a 3 dimensional shape. Other materials and processes can also be used.

The mainly vertically extended legs of the roll over bar are elastically centred in housings connected to the car body. The main housings 11, 11' transfer the forces from the roll over bar into the car body in case of a roll over incident. The use of extruded aluminium profiles for the main housing enables the direct integration of flanges for mounting to the car body, variable thicknesses for effective force transfer with minimum weight, possibility to include threads directly in the part itself etc. Other materials and processes can also be used.

It may be possible to integrate all necessary functions of the housing into one single part, or it may be more beneficial to introduce local reinforcements and extensions to take care of some functions. In this example, two lower housings 12, 12' are introduced below the main housing 11, 11' to provide support for additional components. The lower housings have lower requirements to transfer loads and can preferably be made from thinner material than the main housing to save cost and weight.

In the example described here, a separate bracket 18, 18' for fixation of the locking pawl 14, 14', its bolt 15, 15', spring 16, 16' and spring fixation 17, 17' is attached to the main housing. The locking pawl bracket can be made of an extruded aluminium profile welded to the main housing. For both the lower housings and the locking pawl bracket, other materials and processes can also be used.

The deployment of the roll over bar is driven and limited by a pair of springs 4, 4', supported by spring guides 5, 5' and spring limiters 7, 7' located inside the legs or columns of the roll over bar. The spring limiters 7, 7' are fixed inside the columns of the roll over bar, preferably by plastic deformation of the walls of the roll over bar into grooves on the outside of the spring limiters, and have central holes large enough for the spring guides to pass through but too small for the deployment springs. The lower ends of the spring guides are fixed to the bottom of the housing so that he spring forces acts between the housing and the deployable roll over bar.

A space-saving feature implemented in this solution is the use of the spring guiding system to limit the deployment of the roll over bar. The upper end of the spring guides 5, 5' are equipped with deployment limiters 6, 6' which the spring limiters 7, 7' hit when a certain deployment length is reached. The fixations 20, 20' of the spring guides 5, 5' to the housing 12, 12' are equipped with shock absorbers 19, 19' to limit the impact forces on the system when the deployment is stopped.

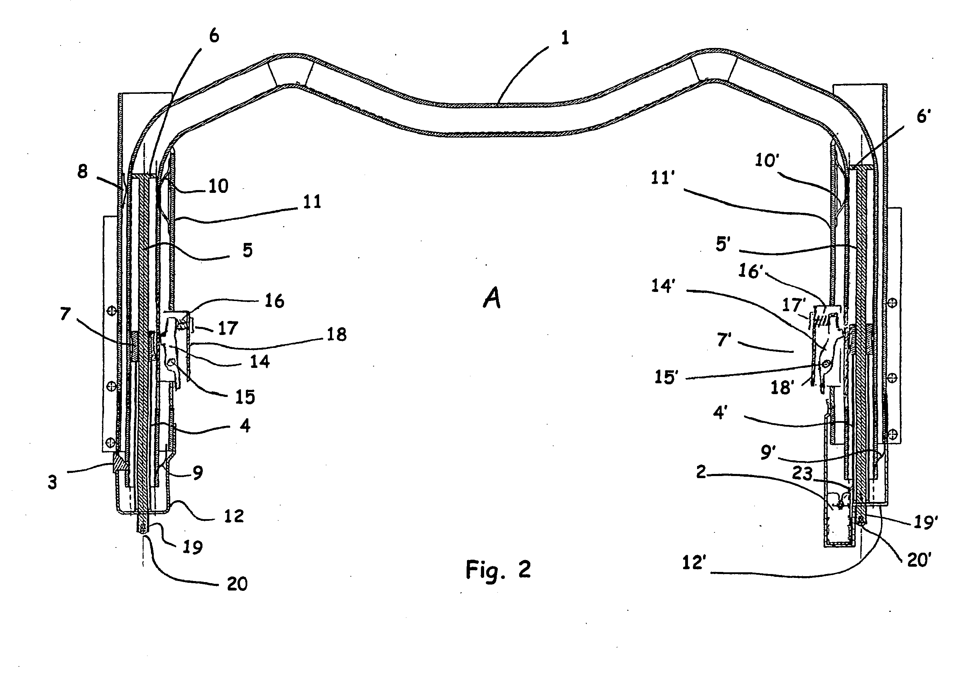

The release and deployment sequence of the roll over bar is described in the following based on Figures 2-4.

In Figure 2, the roll over bar 1 is locked in its retracted position by the restraining hook 3 on one side and the releasable locking device 2 on the other side. A releasable hook 23 has one end fixed to the roll over bar and the other end is secured in the releasable locking device 2. The connection of the releasable hook 23 to the roll allow limited rotations so that the connection can absorb the manufacturing variations of the roll over bar and the housing. The roll over bar is kept in position by the elastic support from the guides 9, 9', 10, 10', 21, 21' all acting on the outside of the bar. There is free space between the springs 4, 4' and spring guides 5, 5' and the Inside the roll over bar so no support or guiding is provided there.

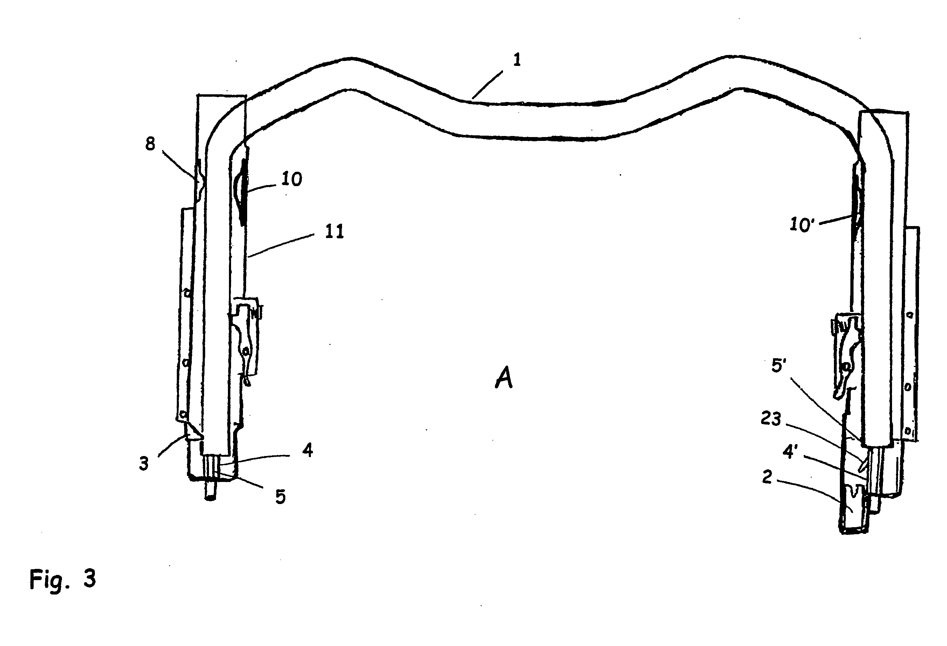

Figure 3 shows the roll over protection system A in the pre-release phase shortly after the release of the releasable locking device. The spring force from 4 has caused the released side of the roll over bar to start its deployment. On the other side, the roll over bar is kept down by the restraining hook 3, and the roll over bar has started to rotate in its own main plane of extension. Higher up on the restrained side, the roll over bar is in contact with the rotation point guide 8 which transfers the rotation of the bar resulting from the mainly vertical deployment of the released side into a mainly horizontal movement of the lower end of the not released side of the roll over bar. The not released side of the bar hence starts to slide off the restraining hook 3. When the deployment of the released side and the resulting rotation has brought the roll over bar completely free from the restraining hook, the bar is fully released and free to complete its deployment.

Figure 4 shows the roll over protection system A when the entire roll over bar has completed its deployment movement and is locked in its deployed, protective position. The locking pawls 14, 14' have rotated into engagement with the lower ends of the roll over bar and prevents it from being pushed down again when subjected to crash loads.

A roll over protection system designed according to the principles above can be made very robust regarding tolerances of the car body, the roll over bar and the assembly process by including sufficient air gap between the roll over bar 1 and the housing assemblies 11, 11', 12, 12'. However, it may be beneficial to eliminate some of the variations to minimize the space needed for the roll over protection system in the car. In this case, a combination of tailor-made transport containers and precisely defined handling-devices could be used to ensure a well defined position of the two housing assemblies to another when the system is assembled into the car body. In particular, there may be significant variations in the width of car body which influence can be eliminated.

The roll over protection bar of the examples is shown as mainly U-shaped, i.e. a top down "U" with one pair of substantially vertically arranged columns or legs.

The roll over protection bar in accordance with the present invention may cover practically the whole width of the vehicle by the arrangement of a single wide bar, or there may be arranged plural units in a side by side manner.

Further, the example shows a system where each side of the roll over bar is guided and supported in individual, not connected housings. However, it should be understood that the principles of the present invention can be applied also is cases where the housings are connected with one or more additional cross members or if the roll over protection system is part of an integrated module with other functions like body stiffness, mounting base for seats, headrests, interior trim etc.

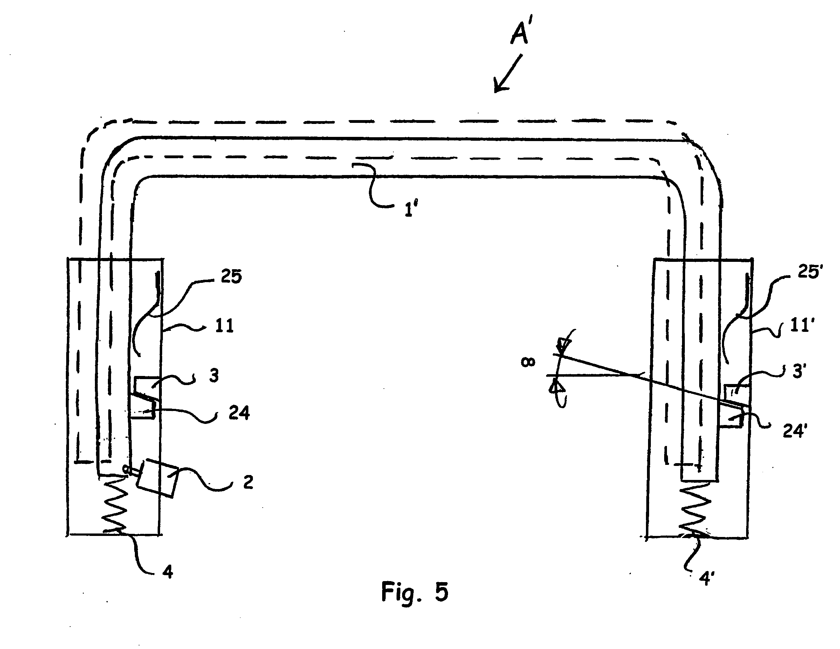

Figure 5 shows schematically an extendable protective structure A' which is not part of the claimed invention. Here, the actuator (releasable locking device) 2 is holding the moveable, protective structure 1' on one side in a transverse, or semi-transverse direction to the main legs of the protective bar. Said direction is defined by the angle "[alpha]" (alpha) of the restraining hooks 3, 3', arresting the system in the main extension direction through interacting with the arresting fingers 24, 24' fixed to the bar. The restraining hooks 3, 3' together with the components of the system are preferably arranged within housings 11, 11'. The first crash release springs 25, 25' ensure the initial movement in the first releasing direction, leading to the full release of the system in the main extension direction, driven by the deployment springs 4, 4'. Both the first releasing movement as well as the main extension movement are translatoric.

Another embodiment could imply that one leg of a U-shaped deployable structure is allowed to move in a first transverse direction relative the length axis of the leg. This movement will be similar to the pre-release movement discussed above, and can be generated by the activation of a releasable locking device.

This pre-release movement will cause a rotation about the similar axis of the other leg.

## Claims

1. Crash protection system for a vehicle such as a passenger car, comprising at least one protective bar (1) having one pair of substantially vertically arranged columns, said bar (1) is movably arranged in the vehicle for being moved from a first retracted position to a second extended position, wherein said bar (1) is locked in its retracted position by a restraining hook (3) on one side and is provided with means for its pre-release, causing it to move towards a first position, and that the bar (1) is completely released and allowed to move to its extended position as the first, pre-released position is achieved, **characterised in that** the protective bar (1) and his pair of columns are manufactured as a single part, so that said bar (1) is mainly U-shaped, said bar (1) is also locked in its retracted position on the other side by a releasable locking device (2) as a mean for its pre-release, wherein said bar (1) is in contact with a rotation point guide (8) located higher upon the side of the restraining hook (3) to swivel said bar (1) around said rotation point guide (8) and to release the column from the restraining hook (3).

2. Crash protection system in accordance with claim 1, **characterised in that** a major component of the said pre-release movement is in a direction transversal versus the direction of extension.

3. Crash protection system in accordance with claim 1, **characterised in that** a major component of the said pre-release movement is a rotation substantially in the plane of extension.

4. Crash protection system in accordance with claim 3, **characterised in that** a set of restraint and support points define the said movement in such a way that when one side of the protective bar (1) has completed a sufficient part of its deployment movement, the other side of the bar (1) is released through a movement mainly perpendicular to the deployment direction, and the entire protective bar (1) is free to complete its deployment.

5. Crash protection system in accordance with claim 1, **characterised in that** the rotation point guide (8) has limited flexibility.

6. Crash protection system in accordance with claim 5, **characterised in that** the protective bar (1) is prevented from accidental release from its restraining hook (3) by means of a guide (9', 10') with limited flexibility located at the outside and around the inner end of the protective bar (1) on the opposite side as the restraining hook (3).

7. Crash protection system in accordance with claim 1, **characterised in that** the releasable locking device (2) is located on the inside of the protective bar (1) at the opposite side as the restraining hook (3) and connected to the bar (1) by means of a connection element mainly capable of transferring axial loads.

8. Crash protection system in accordance with claim 1, **characterisedin that** an assembly of deployment springs (4, 4') with guides (5, 5') and limitators (6, 6', 7, 7') are mounted inside one column of the protective bar (1) in such a way that they do not provide any guidance or limitation for the deployment movement of the protective bar (1).

9. Crash protection system in accordance with claim 8, **characterised in that** the spring guides (5, 5') and spring limitators (6, 6', 7, 7') inside the columns of the protective bar (1) also serves as limitators for the deployment movement.

10. Crash protection system in accordance with claim 1, **characterised in that** the inner end of the columns of the protective bar (1) are used as for a spring-loaded rotational latch locking the roll over bar (1) in its deployed, protective position.

11. Crash protection system in accordance with claim 1, **characterised in that** the protective bar or beam is arranged in the vehicle for roll over protection.

12. Crash protection system in accordance with claim 1, **characterised in that** components of the system are arranged in at least one main housing (11, 11'), where the upper part of the main housing (11,11') serves a fixing point for a seat belt guide.

13. Crash protection system in accordance with claim 1, **characterised in that** the protective bar (1) is arranged in the vehicle for front, rear or lateral protection.

14. Crash protection system in accordance with claim 1, **characterised in that** the protective bar (1) is arranged in the vehicle as a pedestrian protective means.

15. A method for release and extension of a crash protection system for a vehicle, such as a passenger car, the system comprising a roll over protection bar (1) with at least one pair of substantially vertically arranged columns connected with the protective bar (1), wherein said bar (1) is movably arranged in the vehicle for being moved from a first retracted position to a second extended, protective position, wherein said bar (1) will be locked in its retracted position by a restraining hook (3) on one side, **characterised in that** the bar (1) and his pair of columns are manufactured as a single part, so that said bar (1) is mainly U-shaped, wherein said bar (1) will also be locked in its retracted position by a releasable locking device (2) on the other side, said bar (1) is in contact with a rotation point guide (8) located higher upon the side of the restraining hook (3), wherein releasing said bar (1) of the releasable locking device (2) will swivel said bar (1) around said rotation point guide (8) so that the bar (1) is pre-released and allowed to move to a first position, whereby said bar (1) when achieving a predefined position will be fully released from the restraining hook (3) and subsequently moves to its extended position.

16. A method in accordance with claim 15, **characterised in that** a major component of the said pre-release movement is in a direction lateral versus the direction of extension.

17. A method in accordance with claim 15, **characterised in that** a major component of the said pre-releasing movement is constituted by a rotation of the protective bar (1) in its main plane of movements from retracted to extended position.

18. A method in accordance with claim 15, **characterised in that** a major component of the said pre-releasing movement is constituted by a rotation of the protective bar (1) about an axis parallel to its direction of movements from retracted to extended position.

19. A method in accordance with claim 15, **characterised in that** a set of restraint and support points define the said pre-releasing movement in such a way that when one side of the protective bar (1) has completed a sufficient part of its deployment movement, the other side of the bar (1) is released through a movement mainly perpendicular to the deployment direction, and the entire bar (1) is free to complete its deployment.

## Patentansprüche

1. Unfallschutzsystem für ein Fahrzeug, wie beispielsweise einen Personenkraftwagen, das wenigstens einen Schutzbügel (1) umfasst, der ein Paar von im Wesentlichen vertikal angeordneten Säulen hat, wobei der Bügel (1) beweglich in dem Fahrzeug angeordnet ist, um von einer ersten, eingezogenen Stellung zu einer zweiten, ausgefahrenen Stellung bewegt zu werden, wobei der Bügel (1) in seiner eingezogenen Stellung durch einen Rückhaltehaken (3) auf einer Seite arretiert wird und mit Mitteln für seine Vorfreigabe versehen ist, die bewirken, dass er sich zu einer ersten Stellung hin bewegt, und der Bügel (1) vollständig freigegeben und ihm ermöglicht wird, sich zu seiner ausgefahrenen Stellung zu bewegen, wenn die erste, vorfreigegebene Stellung erreicht ist, **dadurch gekennzeichnet, dass** der Schutzbügel (1) und sein Paar von Säulen als ein einziges Teil gefertigt sind, so dass der Bügel (1) hauptsächlich U-förmig ist, wobei der Bügel (1) ebenfalls in seiner eingezogenen Stellung auf der anderen Seite arretiert wird durch eine lösbare Arretierungseinrichtung (2) als ein Mittel zu seiner Vorfreigabe, wobei sich der Bügel (1) in Berührung mit einer Drehpunktführung (8) befindet, die höher auf der Seite des Rückhaltehakens (3) angeordnet ist, um den Bügel (1) um die Drehpunktführung (8) zu schwenken und die Säule von dem Rückhaltehaken (3) freizugeben.

2. Unfallschutzsystem nach Anspruch 1, **dadurch gekennzeichnet, dass** eine Hauptkomponente der Vorfreigabebewegung in einer Richtung, quer gegenüber der Richtung des Ausfahrens, erfolgt.

3. Unfallschutzsystem nach Anspruch 1, **dadurch gekennzeichnet, dass** eine Hauptkomponente der Vorfreigabebewegung eine Drehung, im Wesentlichen in der Ebene des Ausfahrens, ist.

4. Unfallschutzsystem nach Anspruch 3, **dadurch gekennzeichnet, dass** eine Menge von Rückhalte- und Stützpunkten die Bewegung auf eine solche Weise definiert, dass, wenn eine Seite des Schutzbügels (1) einen ausreichenden Teil ihrer Entfaltungsbewegung vollendet hat, die andere Seite des Bügels (1) durch eine Bewegung, im Wesentlichen senkrecht zu der Entfaltungsrichtung, freigegeben wird und der gesamte Schutzbügel (1) seine Entfaltung frei vollenden kann.

5. Unfallschutzsystem nach Anspruch 1, **dadurch gekennzeichnet, dass** die Drehpunktführung (8) eine begrenzte Flexibilität hat.

6. Unfallschutzsystem nach Anspruch 5, **dadurch gekennzeichnet, dass** der Schutzbügel (1) mit Hilfe einer Führung (9', 10') mit begrenzter Flexibilität, die an der Außenseite und um das innere Ende des Schutzbügels (1) auf der zu dem Rückhaltehaken (3) entgegengesetzten Seite bereitgestellt wird, an einer versehentlichen Freigabe von seinem Rückhaltehaken (3) gehindert wird.

7. Unfallschutzsystem nach Anspruch 1, **dadurch gekennzeichnet, dass** die lösbare Arretierungseinrichtung (2) auf der Innenseite des Schutzbügels (1) an der zu dem Rückhaltehaken (3) entgegengesetzten Seite angeordnet und mit Hilfe eines Verbindungselements, das hauptsächlich dazu in der Lage ist, Axiallasten zu übertragen, mit dem Bügel (1) verbunden ist.

8. Unfallschutzsystem nach Anspruch 1, **dadurch gekennzeichnet, dass** eine Baugruppe von Entfaltungsfedern (4, 4') mit Führungen (5, 5') und Begrenzern (6, 6', 7, 7') innerhalb einer Säule des Schutzbügels (1) auf eine solche Weise angebracht ist, dass sie keinerlei Führung oder Begrenzung für die Entfaltungsbewegung des Schutzbügels (1) bereitstellt.

9. Unfallschutzsystem nach Anspruch 8, **dadurch gekennzeichnet, dass** die Federführungen (5, 5') und Federbegrenzer (6, 6', 7, 7') innerhalb der Säulen des Schutzbügels (1) ebenfalls als Begrenzer für die Entfaltungsbewegung dienen.

10. Unfallschutzsystem nach Anspruch 1, **dadurch gekennzeichnet, dass** das innere Ende der Säulen des Schutzbügels (1) als eine federgespannte Drehklinke verwendet wird, die den Überrollbügel (1) in seiner entfaltenden, schützenden Stellung arretiert.

11. Unfallschutzsystem nach Anspruch 1, **dadurch gekennzeichnet, dass** der Schutzbügel oder -balken in dem Fahrzeug zum Überrollschutz angeordnet ist.

12. Unfallschutzsystem nach Anspruch 1, **dadurch gekennzeichnet, dass** die Bestandteile des Systems in wenigstens einem Hauptgehäuse (11, 11') angeordnet sind, wobei der obere Teil des Hauptgehäuses (11, 11') als ein Befestigungspunkt für einen Sicherheitsgurtumlenker dient.

13. Unfallschutzsystem nach Anspruch 1, **dadurch gekennzeichnet, dass** der Schutzbügel (1) in dem Fahrzeug zum Front-, Heck- oder Seitenschutz angeordnet ist.

14. Unfallschutzsystem nach Anspruch 1, **dadurch gekennzeichnet, dass** der Schutzbügel (1) in dem Fahrzeug als ein Fußgängerschutzmittel angeordnet ist.

15. Verfahren zum Freigeben und Ausfahren eines Unfallschutzsystems für ein Fahrzeug, wie beispielsweise einen Personenkraftwagen, wobei das System einen Überrollschutzbügel (1) mit wenigstens einem Paar von im Wesentlichen vertikal angeordneten Säulen umfasst, die mit dem Schutzbügel (1) verbunden sind, wobei der Bügel (1) beweglich in dem Fahrzeug angeordnet ist, um bewegt zu werden von einer ersten, eingezogenen Stellung zu einer zweiten, ausgefahrenen Schutzstellung, wobei der Bügel (1) in seiner eingezogenen Stellung durch einen Rückhaltehaken (3) auf einer Seite arretiert wird, **dadurch gekennzeichnet, dass** der Bügel (1) und sein Paar von Säulen als ein einziges Teil gefertigt sind, so dass der Bügel (1) hauptsächlich U-förmig ist, wobei der Bügel (1) ebenfalls in seiner eingezogenen Stellung durch eine lösbare Sperrvorrichtung (2) auf der anderen Seite arretiert wird, wobei sich der Bügel (1) in Berührung mit einer Drehpunktführung (8) befindet, die höher auf der Seite des Rückhaltehakens (3) angeordnet ist, wobei ein Freigeben des Bügels (1) der lösbaren Sperrvorrichtung (2) den Bügel (1) um die Drehpunktführung (8) schwenken wird, so dass der Bügel (1) vorfreigegeben und es ihm ermöglicht wird, dass er sich zu einer ersten Stellung bewegt, wobei der Bügel (1), wenn er eine vordefinierte Stellung erreicht, vollständig von dem Rückhaltehaken (3) freigegeben wird und sich anschließend zu seiner ausgefahrenen Stellung bewegt.

16. Verfahren nach Anspruch 15, **dadurch gekennzeichnet, dass** eine Hauptkomponente der Vorfreigabebewegung in einer Richtung, seitlich gegenüber der Richtung des Ausfahrens, erfolgt.

17. Verfahren nach Anspruch 15, **dadurch gekennzeichnet, dass** eine Hauptkomponente der Vorfreigabebewegung aus einer Drehung des Schutzbügels (1) in seiner Hauptebene der Bewegungen von der eingezogenen zu der ausgefahrenen Stellung besteht.

18. Verfahren nach Anspruch 15, **dadurch gekennzeichnet, dass** eine Hauptkomponente der Vorfreigabebewegung aus einer Drehung des Schutzbügels (1) um eine Achse, parallel zu seiner Richtung der Bewegungen von der eingezogenen zu der ausgefahrenen Stellung, besteht.

19. Verfahren nach Anspruch 15, **dadurch gekennzeichnet, dass** eine Menge von Rückhalte- und Stützpunkten die Vorfreigabebewegung auf eine solche Weise definiert, dass, wenn eine Seite des Schutzbügels (1) einen ausreichenden Teil ihrer Entfaltungsbewegung vollendet hat, die andere Seite des Bügels (1) durch eine Bewegung, im Wesentlichen senkrecht zu der Entfaltungsrichtung, freigegeben wird und der gesamte Bügel (1) seine Entfaltung frei vollenden kann.

## Revendications

1. Système de protection en cas d'accident pour un véhicule tel qu'une voiture de tourisme, comprenant au moins une barre protectrice (1) comportant une paire de colonnes agencées sensiblement verticalement, ladite barre (1) est agencée de façon mobile dans le véhicule pour être déplacée d'une première position rétractée à une seconde position étendue, dans lequel ladite barre (1) est verrouillée dans sa position rétractée par un crochet de retenue (3) sur un côté et est pourvue de moyens pour sa prélibération, l'amenant à se déplacer vers une première position, et ladite barre (1) est totalement libérée et peut se déplacer dans sa position étendue lorsque la première position prélibérée est atteinte, **caractérisé en ce que** la barre protectrice (1) et sa paire de colonnes sont fabriquées en une seule pièce, de sorte que ladite barre (1) soit principalement en forme de U, ladite barre (1) est également verrouillée dans sa position rétractée sur l'autre côté par un dispositif de verrouillage libérable (2) en tant que moyen pour sa prélibération, dans lequel ladite barre (1) est en contact avec un guide-point de rotation (8) situé plus haut sur le côté du crochet de retenue (3) pour pivoter ladite barre (1) autour dudit guide-point de rotation (8) et pour libérer la colonne du crochet de retenue (3).

2. Système de protection en cas d'accident selon la revendication 1, **caractérisé en ce qu'**un composant majeur dudit mouvement de prélibération se fait dans une direction transversale contre la direction d'extension.

3. Système de protection en cas d'accident selon la revendication 1, **caractérisé en ce qu'**un composant majeur dudit mouvement de prélibération est une rotation sensiblement dans le plan d'extension.

4. Système de protection en cas d'accident selon la revendication 3, **caractérisé en ce qu'**un ensemble de points de retenue et de support définissent ledit mouvement de telle manière que lorsqu'un côté de la barre protectrice (1) a achevé une partie suffisante de son mouvement de déploiement, l'autre côté de la barre (1) est libéré à travers un mouvement principalement perpendiculaire à la direction de déploiement, et la totalité de la barre protectrice (1) est libre d'achever son déploiement.

5. Système de protection en cas d'accident selon la revendication 1, **caractérisé en ce que** le guide-point de rotation (8) a une flexibilité limitée.

6. Système de protection en cas d'accident selon la revendication 5, **caractérisé en ce qu'**une libération accidentelle de la barre protectrice (1) de son crochet de retenue (3) est empêchée au moyen d'un guide (9', 10') à flexibilité limitée situé à l'extérieur et autour de l'extrémité interne de la barre protectrice (1) sur le côté opposé du crochet de retenue (3).

7. Système de protection en cas d'accident selon la revendication 1, **caractérisé en ce que** le dispositif de verrouillage libérable (2) est situé sur l'intérieur de la barre protectrice (1) sur le côté opposé du crochet de retenue (3) et relié à la barre (1) au moyen d'un élément de raccordement principalement capable de transférer des charges axiales.

8. Système de protection en cas d'accident selon la revendication 1, **caractérisé en ce qu'**un ensemble de ressorts de déploiement (4, 4') avec des guides (5, 5') et des limitateurs (6, 6', 7, 7') sont montés à l'intérieur d'une colonne de la barre protectrice (1) de telle manière qu'ils ne fournissent pas de guidage ou de limitation pour le mouvement de déploiement de la barre protectrice (1).

9. Système de protection en cas d'accident selon la revendication 8, **caractérisé en ce que** les guides de ressorts (5, 5') et les limitateurs de ressort (6, 6', 7, 7') à l'intérieur des colonnes de la barre protectrice (1) servent également de limitateurs pour le mouvement de déploiement.

10. Système de protection en cas d'accident selon la revendication 1, **caractérisé en ce que** l'extrémité interne des colonnes de la barre protectrice (1) est utilisée comme un taquet rotatif à ressort verrouillant la barre anti-renversement (1) dans sa position protectrice déployée.

11. Système de protection en cas d'accident selon la revendication 1, **caractérisé en ce que** la barre ou traverse protectrice est agencée dans le véhicule pour une protection anti-renversement.

12. Système de protection en cas d'accident selon la revendication 1, **caractérisé en ce que** des composants du système sont agencés dans au moins un logement principal (11, 11'), où la partie supérieure du logement principal (11, 11') sert de point de fixation pour un guide de ceinture de sécurité.

13. Système de protection en cas d'accident selon la revendication 1, **caractérisé en ce que** la barre protectrice (1) est agencée dans le véhicule pour une protection avant, arrière ou latérale.

14. Système de protection en cas d'accident selon la revendication 1, **caractérisé en ce que** la barre protectrice (1) est agencée dans le véhicule en tant que moyen protecteur de piéton.

15. Procédé de libération et d'extension d'un système de protection en cas d'accident pour un véhicule tel qu'une voiture de tourisme, le système comprenant une barre protectrice en cas de renversement (1) avec au moins une paire de colonnes agencées sensiblement verticalement reliées à la barre protectrice (1), dans lequel ladite barre (1) est agencée de façon mobile dans le véhicule pour être déplacée d'une première position rétractée à une seconde position protectrice étendue, dans lequel ladite barre (1) sera verrouillée dans sa position rétractée par un crochet de retenue (3) sur un côté, **caractérisé en ce que** la barre (1) et sa paire de colonnes sont fabriquées en une seule pièce, de sorte que ladite barre (1) soit principalement en forme de U, dans lequel ladite barre (1) sera également verrouillée dans sa position rétractée par un dispositif de verrouillage libérable (2) sur l'autre côté, ladite barre (1) est en contact avec un guide-point de rotation (8) situé plus haut sur le côté du crochet de retenue (3), dans lequel la libération de ladite barre (1) du dispositif de verrouillage libérable (2) pivotera ladite barre (1) autour dudit guide-point de rotation (8) de sorte que la barre (1) soit prélibérée et puisse se déplacer vers une première position, moyennant quoi ladite barre (1), lorsqu'elle atteint une position prédéfinie, sera totalement libérée du crochet de retenue (3) et se déplacera ultérieurement vers sa position étendue.

16. Procédé selon la revendication 15, **caractérisé en ce qu'**une composante majeure dudit mouvement de prélibération se fait dans une direction latérale contre la direction d'extension.

17. Procédé selon la revendication 15, **caractérisé en ce qu'**une composante majeure dudit mouvement de prélibération est constituée par une rotation de la barre protectrice (1) dans son plan principal de mouvements d'une position rétractée à étendue.

18. Procédé selon la revendication 15, **caractérisé en ce qu'**une composante majeure dudit mouvement de prélibération est constituée par une rotation de la barre protectrice (1) autour d'un axe parallèle à sa direction de mouvements d'une position rétractée à étendue.

19. Procédé selon la revendication 15, **caractérisé en ce qu'**un ensemble de points de retenue et de support définissent ledit mouvement de prélibération de telle manière que lorsqu'un côté de la barre protectrice (1) a achevé une partie suffisante de son mouvement de déploiement, l'autre côté de la barre (1) est libéré à travers un mouvement principalement perpendiculaire à la direction de déploiement, et la totalité de la barre (1) est libre d'achever son déploiement.
